# EUROPÄISCHE PATENTSCHRIFT

(11) **EP 3 187 351 B1**
(45) Veröffentlichungstag und Bekanntmachung des Hinweises auf die Patenterteilung: **05.12.2018**
(21) Anmeldenummer: 16203651.1
(22) Anmeldetag: 13.12.2016
(51) Int. Cl.: B60J 7/12

(54) **VERDECK EINES CABRIOLET-FAHRZEUGS MIT EINEM DEFORMATIONSBEREICH**
TOP FOR A CONVERTIBLE WITH A DEFORMATION AREA
CAPOTE D'UN VÉHICULE CABRIOLET COMPRENANT UNE ZONE DE DÉFORMATION

(30) Priorität: 30.12.2015 DE 102015122992
(43) Veröffentlichungstag der Anmeldung: 05.07.2017
(73) Patentinhaber: Valmet Automotive Oy, 23500 Uusikaupunki (FI)
(72) Erfinder: Hollenbeck, Sven, 49492 Westerkappeln (DE); Selle, Heinrich, 32549 Bad Oeynhausen (DE); Plum, Rüdiger, 49504 Lotte (DE); Holstein, Matthias, 49586 Merzen (DE); Lehmkuhl, Marc, 49565 Bramsche (DE); Glosemeier, Ingo, 49186 Bad Iburg (DE); Wesemann, Michael, 49565 Bramsche (DE)
(74) Vertreter: Kronthaler, Wolfgang N.K.

(56) Entgegenhaltungen:
- EP-A1- 2 886 380
- DE-A1-102004 039 901
- DE-A1-102008 036 901

## Beschreibung

Die Erfindung betrifft ein Verdeck eines Cabriolet-Fahrzeugs, das mittels eines Verdeckgestänges zwischen einer offenen Position und einer geschlossenen Position verlagerbar ist, gemäß der im Oberbegriff des Patentanspruches 1 näher definierten Art.

Aus der Praxis sind vielfältige Bauarten von Verdecken von Cabriolet-Fahrzeugen bekannt. Mittels eines Verdeckgestänges sind bekannte Verdecke zwischen einer einen Fahrgastraum zumindest bereichsweise abdeckenden, geschlossenen Position und einer den Fahrgastraum zumindest teilweise freigebenden, offenen Position verlagerbar. Im Falle beispielsweise eines Crashs während einer Verlagerungsbewegung des Verdecks, d. h. wenn auf das Verdeck während einer Verdeckbewegung eine große, äußere Kraft wirkt, können bei entsprechender Größe der äußeren Kraft Elemente des Verdecks beschädigt werden und gegebenenfalls versagen. Zudem können Elemente des Verdecks durch das Versagen eines oder mehrerer Elemente des Verdecks im Crashfall eine unbestimmte Bewegung durchführen.

Aus der DE 10 2004 039 901 A1 ist ein öffnungsfähiges Fahrzeugverdeck bekannt, das über eine Dachkinematik verstellbar an die Fahrzeugkarosserie angeschlagen ist. Ein Lenker der Dachkinematik weist dabei einen energieabsorbierenden Verformungsabschnitt auf.

Eine Faltdachanordnung mit einem Verdeckbezug und einem Verdeckgestell ist aus der DE 10 2008 036 901 A1 bekannt, wobei ein Dachrahmen mit einem vorderen Bereich und ein elastisch verformbares Spannelement vorgesehen sind. Das Verdeckgestell ist dabei so faltbar oder zusammenlegbar, dass sich das Spannelement beim Falten elastisch verformt.

Aus der EP 2 886 380 A1 ist eine Antriebsvorrichtung eines Verdecks eines Cabriolet-Fahrzeugs bekannt, die mit Zahnrädern ausgeführt ist.

Es ist Aufgabe der vorliegenden Erfindung, ein Verdeck eines Cabriolet-Fahrzeugs zu schaffen, welches einem Crashfall insbesondere während einer Verlagerungsbewegung des Verdecks sicher standhält.

Diese Aufgabe wird mit einem Verdeck gemäß den Merkmalen des Patentanspruches 1 gelöst.

Es wird somit ein Verdeck eines Cabriolet-Fahrzeugs vorgeschlagen, das mittels eines Verdeckgestänges zwischen einer offenen Position und einer geschlossenen Position verlagerbar ist, wobei wenigstens ein Element des Verdecks einen Deformationsbereich aufweist, wobei der Deformationsbereich des Elements zur Umwandlung zumindest eines Teils einer bei sich in einer Zwischenposition zwischen der offenen Position und der geschlossenen Position befindlichem Verdeck auf das Verdeck wirkenden äußeren Kraft, die einen vorgegebenen Grenzwert überschreitet, in Verformungsenergie ausgeführt ist.

Erfindungsgemäß ist vorgesehen, dass das den Deformationsbereich aufweisende Element des Verdecks eine zur Verlagerung des Verdecks vorgesehene Zahnsegmenteinrichtung ist, wobei das Verdeck durch ein Zusammenwirken der Zahnsegmenteinrichtung mit einer Antriebseinrichtung zwischen seiner offenen Position und seiner geschlossenen Position verlagerbar ist.

Ein erfindungsgemäß ausgeführtes Verdeck hat den Vorteil, dass durch die Ausführung eines Elements des Verdecks mit einem Deformationsbereich die insbesondere in einem Crashfall auf das Verdeck wirkende äußere Kraft bzw. Impulskraft zumindest zu einem großen Teil durch dieses Element definiert durch Umwandlung in Verformungsenergie aufnehmbar ist. Durch eine entsprechende Auswahl des Elements und eine entsprechende Ausführung des Deformationsbereichs kann auf konstruktiv einfache Weise sichergestellt werden, dass das Element des Verdecks im Crashfall die äußere Kraft derart in Verformungsenergie umwandelt, dass das Element nicht versagt. Hierdurch werden auch eine unkontrollierte Bewegung von Elementen des Verdecks im Crashfall und eine Beschädigung von weiteren Elementen des Verdecks sicher verhindert.

Mittels der Zahnsegmenteinrichtung ist insbesondere ein Hauptlenker oder eine Hauptsäule des Verdecks an einem Hauptlager des Verdecks gelagert.

Bei einer vorteilhaften Ausführung eines erfindungsgemäßen Verdecks ist es vorgesehen, dass das den Deformationsbereich aufweisende Element bei Auftreten einer äußeren, einen vorgegebenen Grenzwert überschreitenden Kraft in dem Deformationsbereich elastisch und/oder plastisch verformbar ist.

Um eine gezielte Umwandlung der äußeren Kraft in Verformungsenergie durch das Element in dem Deformationsbereich auf konstruktiv einfache Weise zu erreichen, kann das Element in dem Deformationsbereich wenigstens eine schlitzförmige Ausnehmung aufweisen. Die schlitzförmige Ausnehmung stellt eine gezielte Schwächung des Elements dar, so dass die äußere Kraft im Crashfall sicher, insbesondere vollständig durch eine Verformung des die schlitzförmige Ausnehmung umfassenden Deformationsbereichs des Elements aufnehmbar ist.

Es ist vorzugsweise eine als Elektromotor oder hydraulischer Antrieb ausgeführte Antriebseinrichtung zur Verlagerung des Verdecks zwischen der offenen Position und der geschlossenen Position vorgesehen.

Bei einer konstruktiv einfachen Ausführung der Erfindung ist die Zahnsegmenteinrichtung mit einem Scheibenelement und wenigstens einem Zähne der Zahnsegmenteinrichtung aufweisenden Zahnsegment ausgebildet, wobei das Zahnsegment in mit dem Scheibenelement verbundenem Zustand zumindest bereichsweise in Umfangsrichtung der Zahnsegmenteinrichtung in einem in radialer Richtung äußeren Randbereich des Scheibenelements angeordnet ist. Das Scheibenelement ist dabei insbesondere mit einem metallischen Werkstoff ausgeführt, wohingegen das Zahnsegment vorzugsweise mit einem Kunststoff ausgebildet ist. Die Zähne der Zahnsegmenteinrichtung wirken mit einer insbesondere als Elektromotor ausgeführten Antriebseinrichtung zur Überführung des Verdecks zwischen der geschlossenen Position und der offenen Position zusammen.

Bei einer vorteilhaften Ausführung der Erfindung weist das Scheibenelement den Deformationsbereich auf, wobei hierzu wenigstens eine schlitzförmige Ausnehmung in dem Scheibenelement vorgesehen ist, die sich beispielsweise im Wesentlichen in radialer Richtung des Scheibenelements von einem äußeren Randbereich des Scheibenelements nach innen oder in tangentialer Richtung des Scheibenelements erstreckt.
Bei einer vorteilhaften Weiterbildung des erfindungsgemäßen Verdecks ist das Scheibenelement zumindest bereichsweise mit Zähnen ausgeführt, die bei der Überführung des Verdecks zwischen der geschlossenen und der offenen Position zeitweise in Eingriff mit einem Antriebsritzel der Antriebseinrichtung stehen, wobei das Scheibenelement im Bereich seiner Zähne mit wenigstens einer schlitzartigen Ausnehmung ausgeführt ist. Das Scheibenelement kann dabei grundsätzlich eine beliebige Anzahl von Zähnen aufweisen, wobei insbesondere zwischen drei und acht Zähne, vorzugsweise vier Zähne, vorgesehen sind. Durch das Vorsehen der insbesondere metallischen Zähne des Scheibenelements in Kombination mit der wenigstens einen schlitzförmigen Ausnehmung des Scheibenelements ist auf konstruktiv einfache Weise ein Deformationsbereich im Bereich der Zahnsegmenteinrichtung geschaffen, mittels dem in einem Crashfall ein Großteil der äußeren Kraft in Verformungsenergie umwandelbar ist und ein Versagen des Scheibenelements im Crashfall auf sichere Weise verhindert ist.
Sämtliche Zähne der Zahnsegmenteinrichtung weisen bei einer vorteilhaften Ausführung des erfindungsgemäßen Verdecks eine im Wesentlichen identische Breite in axialer Richtung der Zahnsegmenteinrichtung auf, wobei die Zähne der Zahnsegmenteinrichtung im Bereich der Zähne des Scheibenelements gemeinsam von den Zähnen des Scheibenelements und den Zähnen des Zahnelements gebildet sind. Hierdurch sind die Zähne des Scheibenelements auf günstige Weise in die Zähne des Zahnsegments integriert.

In einer nicht erfindungsgemäßen Ausführung kann Deformationsbereich in einem Verbindungsbereich von zwei Verdeckgestängeelementen bzw. in einem Verbindungsbereich von einem Verdeckgestängeelement und einer zur Verlagerung des Verdecks zwischen seiner offenen Position und seiner geschlossenen Position vorgesehenen Zahnsegmenteinrichtung angeordnet sein, wobei die Verdeckgestängeelemente bzw. das Verdeckgestängeelement und die Zahnsegmenteinrichtung mittels einer insbesondere als Schraubverbindung ausgeführten Befestigungseinrichtung miteinander verbindbar sind. Der Deformationsbereich kann beispielsweise in einem Verbindungsbereich eines wenigstens zweigeteilt ausgeführten Lenkers des Verdeckgestänges angeordnet sein.

Bei einer konstruktiv einfachen Ausführung des nicht erfindungsgemäßen Verdecks ist das Verdeckgestängeelement mittels der Befestigungseinrichtung an einem fest mit der Zahnsegmenteinrichtung verbundenen Befestigungselement anordenbar, wobei die Befestigungseinrichtung mit einem insbesondere ein Außengewinde aufweisenden Endbereich aus dem Befestigungselement hinausragt. Das Befestigungselement ist dabei vorzugsweise klotz- bzw. blockförmig ausgeführt, wobei mittels der vorzugsweise als Schraubverbindung ausgeführten Befestigungseinrichtung in einem Endbereich der Schraubverbindung, der dem das Außengewinde abweisenden Endbereich der Befestigungseinrichtung abgewandt ist, vorzugsweise das Verdeckgestängeelement an dem Befestigungselement angeordnet ist. Es kann auch vorgesehen sein, dass das Verdeckgestängeelement mittels der Befestigungseinrichtung direkt an der Zahnsegmenteinrichtung angebunden ist.
Die Umwandung der äußeren, in einem Crashfall auf das Verdeck wirkenden Kraft in Verformungsenergie kann auf günstige Weise durchgeführt werden, wenn die Befestigungseinrichtung mit einer den Deformationsbereich ausbildenden Hülseneinrichtung, insbesondere einer Einnietmutter bzw. Blindnietmutter, zusammenwirkt, die mit einem Endbereich der Befestigungseinrichtung wirkverbunden ist. Die Hülseneinrichtung ist zumindest bereichsweise mit einem Innengewinde ausgeführt, welches mit dem Außengewinde der Befestigungseinrichtung in dem Endbereich der Befestigungseinrichtung zusammenwirkt. In einem dem Endbereich abgewandten Bereich weist die Hülseneinrichtung insbesondere einen Bund auf, der an dem Befestigungselement anliegt. In Längsrichtung der Hülseneinrichtung zwischen dem Bund und dem mit dem Außengewinde der Befestigungseinrichtung verbundenen Endbereich wirkt die Hülseneinrichtung lose mit der Befestigungseinrichtung zusammen, wobei dieser Bereich zur Aufnahme von Verformungsenergie im Crashfall in Längsrichtung der Hülseneinrichtung stauchbar ist.

Bei einer konstruktiv einfachen Ausführung eines nicht erfindungsgemäßen Verdecks ist der Deformationsbereich mit einer Federeinrichtung ausgeführt und/oder durch ein komprimierbares Element, insbesondere eine Gummielement oder ein Kunststoffelement, gebildet.
Insbesondere wenn die Federeinrichtung in Längsrichtung der Schraubverbindung zwischen einem fest mit einem Endbereich der Befestigungseinrichtung verbundenen Element, insbesondere einem Absatz eines hülsenförmigen Elements, das auf der Schraubverbindung aufgeschraubt ist, und dem Befestigungselement angeordnet ist, kann die in einem Crashfall auf das Verdeck wirkende äußere Kraft auf günstige Weise zumindest teilweise von der Federeinrichtung aufgenommen werden. Eine Federstärke der Federeinrichtung kann dabei in gewünschtem Umfang je nach Anwendungsfall gewählt werden.

Bei einer vorteilhaften Ausführung eines nicht erfindungsgemäßen Verdecks ist das komprimierbare Element in Längsrichtung der Schraubverbindung zwischen einem fest mit einem Endbereich der Befestigungseinrichtung verbundenen Element und dem Befestigungselement angeordnet. Das Kunststoffelement ist vorzugsweise als Kunststoffelement mit einem terpolymeren Elastomer, insbesondere mit Ethylen-Propylen-Dien-Kautschuk, ausgeführt. Das mit dem Endbereich der Befestigungseinrichtung verbundene Element kann insbesondere scheibenförmig ausgeführt sein oder als Hülse mit einem Absatz ausgebildet sein, die vorzugsweise auf ein Außengewinde der Befestigungseinrichtung aufgeschraubt ist.
Das den Deformationsbereich aufweisende Element ist bei einer vorteilhaften Ausführung des nicht erfindungsgemäßen Verdecks eine Antriebswelle einer zur Verlagerung des Verdecks zwischen seiner geschlossenen Position und seiner offenen Position vorgesehenen, insbesondere als Elektromotor ausgeführten Antriebseinrichtung, wobei der Deformationsbereich durch einen definiert reduzierten Querschnitt der Antriebswelle gebildet ist. Eine in einem Crashfall auf das Verdeck wirkende äußere Kraft kann durch eine entsprechende Wahl des Querschnitts der Antriebwelle in dem Deformationsbereich zu einem großen Teil durch eine Verformung der Antriebswelle in dem Deformationsbereich aufgenommen werden, so dass ein Versagen der Antriebswelle und auch weiterer Elemente des Verdeck im Crashfall sicher verhindert ist.

Sowohl die in den Patentansprüchen angegebenen Merkmale als auch die in den nachfolgenden Ausführungsbeispielen des erfindungsgemäßen Verdecks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Verdecks ergeben sich aus den Patentansprüchen und den nachfolgend unter Bezugnahme auf die Zeichnung prinzipmäßig beschriebenen Ausführungsbeispielen, wobei zugunsten der Übersichtlichkeit jeweils für bau- und funktionsgleiche Bauteile dieselben Bezugszeichen verwendet werden.

Es zeigt:
- Fig. 1: eine vereinfachte, dreidimensionale Ansicht eines Cabriolet-Fahrzeugs mit einem in geschlossener Position dargestellten Verdeck;
- Fig. 2: eine vereinfachte, dreidimensionale Ansicht eines Ausschnitts des Verdecks der Fig. 1, wobei eine Zahnsegmenteinrichtung gezeigt ist, mittels der das Verdeck von einem Elektromotor zwischen der geschlossenen Position und einer offenen Position verlagerbar ist, und wobei eine Hauptsäule des Verdecks mittels einer Schraubverbindung an einem fest mit der Zahnsegmenteinrichtung angeordneten Befestigungselement angebunden ist;
- Fig. 3: eine vereinfachte Ansicht des Befestigungselements und der Schraubverbindung gemäß Fig. 2, wobei die Schraubverbindung mit einer Hülseneinrichtung zusammenwirkt;
- Fig. 4: eine der Fig. 3 entsprechende Ansicht des Befestigungselements und der Schraubverbindung, wobei die Hülseneinrichtung in einem Zustand nach einem Crashfall gezeigt ist;
- Fig. 5: eine vereinfachte Ansicht eines der Fig. 3 und Fig. 4 entsprechenden Ausschnitts des Verdecks gemäß einer alternativen nicht erfindungsgemäßen Ausführung, wobei die Schraubverbindung mit einer Federeinrichtung zusammenwirkt;
- Fig. 6: eine der Fig. 5 entsprechende Ansicht des Befestigungselements und der Schraubverbindung, wobei die Federeinrichtung in einem Zustand nach einem Crashfall gezeigt ist;
- Fig. 7: eine vereinfachte Ansicht eines den Fig. 3 bis Fig. 6 entsprechenden Ausschnitts des Verdecks gemäß einer alternativen nicht erfindungsgemäßen Ausführung, wobei die Schraubverbindung mit einer ein Kunststoffelement halternden Hülseneinrichtung zusammenwirkt;
- Fig. 8: eine der Fig. 7 entsprechende Ansicht des Befestigungselements und der Schraubverbindung, wobei das Kunststoffelement in einem Zustand nach einem Crashfall gezeigt ist;
- Fig. 9: eine vereinfachte Ansicht einer Ausführung der Erfindung, wobei ein Scheibenelement der Zahnsegmenteinrichtung in einem Deformationsbereich mit einer schlitzförmigen Ausnehmung ausgeführt ist;
- Fig. 10: eine der Fig. 9 entsprechende Ansicht der Zahnsegmenteinrichtung nach einem Crashfall;
- Fig. 11: eine vereinfachte Ansicht einer alternativen Ausführung der Erfindung, wobei die Zahnsegmenteinrichtung mit einem Zähne aufweisenden und in einem Deformationsbereich mit schlitzförmigen Ausnehmungen ausgeführten Scheibenelement und einem randseitig mit dem Scheibenelement verbundenen Zahnsegment ausgeführt ist;
- Fig. 12: eine vereinfachte Ansicht des Scheibenelements gemäß Fig. 11 mit dem Befestigungselement in Alleinstellung;
- Fig. 13: eine stark schematisierte Ansicht von Zähnen des Scheibenelements im Zusammenspiel mit Zähnen des Zahnsegments der Zahnsegmenteinrichtung gemäß Fig. 11 und Fig. 12;
- Fig. 14: eine vereinfachte Ansicht der Zahnsegmenteinrichtung gemäß Fig. 11 nach einem Crashfall;
- Fig. 15: eine vereinfachte Ansicht einer Antriebswelle eines Elektromotors gemäß einer alternativen nicht erfindungsgemäßen Ausführung in Alleinstellung, wobei die Antriebswelle zur Verlagerung des Verdecks zwischen der geschlossenen Position und der offenen Position vorgesehen ist; und
- Fig. 16: eine vereinfachte Ansicht einer alternativen nicht erfindungsgemäßen Ausführung des Verdecks mit einem einen schlitzförmigen Deformationsbereich aufweisenden Hauptlenker.

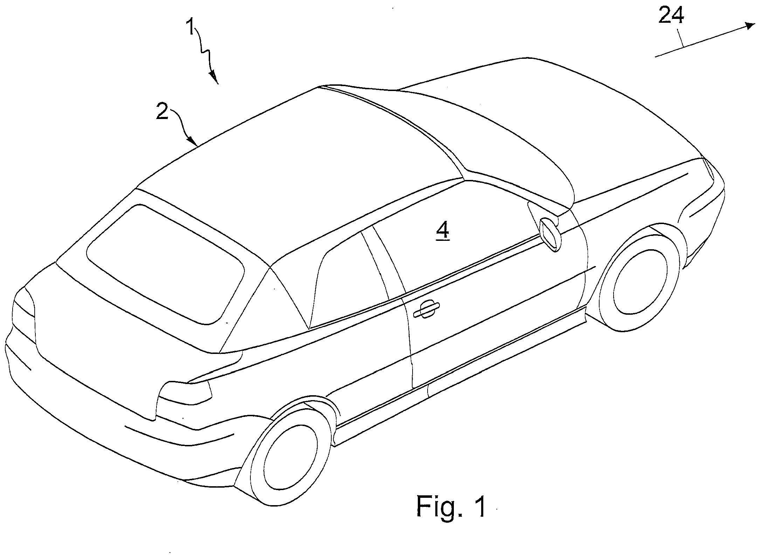

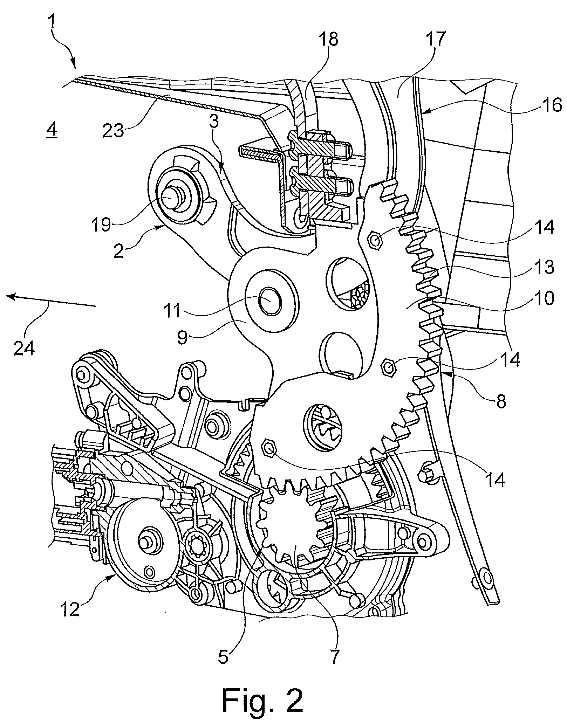

Fig. 1 zeigt ein Verdeck 2 eines Cabriolet-Fahrzeugs 1, welches vorliegend als Soft-Top-Verdeck ausgebildet ist, aber bei einer alternativen Ausführung der Erfindung auch als Hard-Top-Verdeck ausgeführt sein kann. Das Verdeck 2 ist mittels eines in der Fig. 2 ausschnittsweise ersichtlichen Verdeckgestänges 3 zwischen der in Fig. 1 gezeigten geschlossenen Position, in der das Verdeck 2 einen Fahrgastraum 4 überspannt, und einer nicht näher ersichtlichen, in einem heckseitigen Ablageraum verstauten offenen Position, in welcher der Fahrgastraum 4 zumindest teilweise freigegeben ist, verlagerbar.

Das Verdeckgestänge 3 ist hierbei von einer vorliegend als Elektromotor 5 ausgeführten Antriebseinrichtung betätigbar, wobei ein von dem Elektromotor 5 antreibbares Antriebsritzel 7 hierzu mit einer Zahnsegmenteinrichtung 8 in Eingriff steht. Die Zahnsegmenteinrichtung 8 weist vorliegend ein mit einem metallischen Werkstoff ausgeführtes Scheibenelement 9 und ein mit einem Kunststoff ausgeführtes Zahnsegment 10 auf, wobei das Scheibenelement 9 in einem Drehpunkt 11 drehbar gegenüber einem Hauptlager 12 des Verdecks 2 gelagert ist. Das insbesondere mit Kunststoff ausgeführte Zahnsegment 10 weist eine Vielzahl von in Eingriff mit dem Antriebsritzel 7 stehenden Zähnen 13 auf und ist in einem bezüglich des Drehpunkts 11 radial äußeren Bereich des Scheibenelements 9 im Wesentlichen in Umfangsrichtung des Scheibenelements 9 verlaufend angeordnet und über Befestigungsmittel 14 mit dem Scheibenelement 9 verbunden.

Das Verdeckgestänge 3 weist hier eine ein Viergelenk ausbildende Hauptschere 16 mit einem Hauptlenker 17 und einer Hauptsäule 18 auf, wobei der Hauptlenker 17 einenends in einem Drehpunkt 19 drehbar gegenüber dem Hauptlager 12 gelagert ist. Die Hauptsäule 18 ist dagegen mit einem Befestigungselement 20 verbunden, das wiederum fest an dem Scheibenelement 9 angebunden ist.

Fig. 2 zeigt weiterhin einen Innenhimmel 23 des Verdecks 2, der in geschlossener Verdeckposition in Fahrzeuglängsrichtung bzw. Fahrtrichtung 24 bereichsweise an die Schraubverbindungen 21 und die Hauptsäule 18 grenzt.

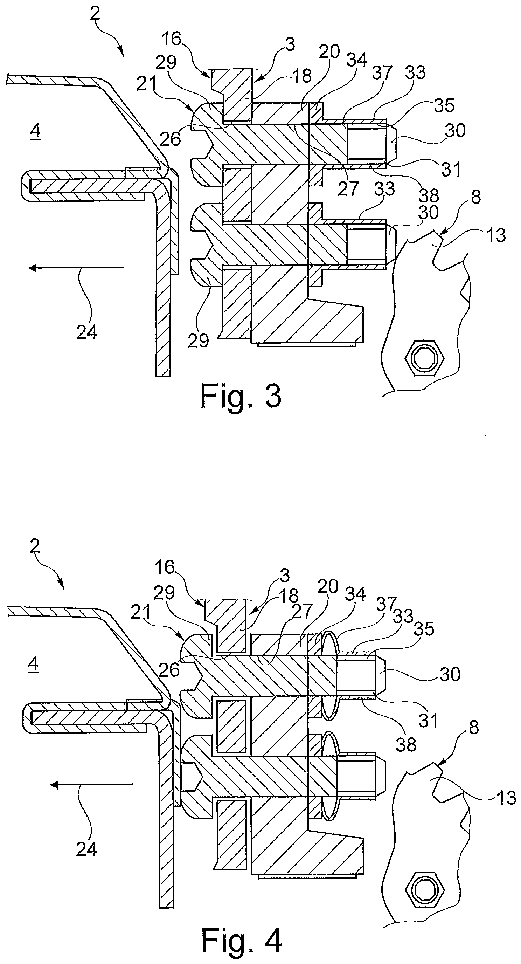

Wie in Fig. 3 und Fig. 4 näher ersichtlich ist, sind zwei jeweils als Schraubverbindung 21 ausgeführte Befestigungseinrichtungen vorgesehen, die jeweils durch eine Ausnehmung 26 der Hauptsäule 18 und eine als Durchgangsbohrung 27 ausgeführte Ausnehmung des Befestigungselements 20 hindurchragen. Das Befestigungselement 20 ist hierbei gegenüber der Schraubverbindung 21 in Längsrichtung der Schraubverbindung 21 bewegbar gelagert. Ein einem Kopfbereich 29 der Schraubverbindung 21, der in montierter Position an der Hauptsäule 18 anliegt, abgewandter Endbereich 30 der Schraubverbindung 21 stellt dabei ein durch das Befestigungselement 20 hinausragendes freies Ende dar, wobei die Schraubverbindung 21 in dem Endbereichs 30 mit einem Außengewinde 31 ausgeführt ist. Allerdings ist nicht der gesamte aus dem Befestigungselement 20 hinausragende Teil der Schraubverbindung 21 mit dem Außengewinde 31 versehen, sondern vorliegend etwa die Hälfte der Längserstreckung der Schraubverbindung 21, die aus dem Befestigungselement 20 hinausragt.

Es ist weiterhin eine vorliegend als Einnietmutter 33 ausgeführte Hülseneinrichtung vorgesehen, die einenends mit einem Bund 34 ausgeführt ist. Die Einnietmutter 33 ist zumindest in dem in montierter Position mit dem Außengewinde 31 der Schraubverbindung 21 zusammenwirkenden Bereich mit einem Innengewinde 35 ausgeführt und liegt in montierter Position mit dem Bund 34 an dem Befestigungselement 20 an, wobei die Einnietmutter 33 in dem Bereich des aus dem Befestigungselement 20 hinausragenden Teils der Schraubverbindung 21, der kein Außengewinde 31 aufweist, lose mit der Schraubverbindung 21 zusammenwirkt.

Im Zusammenspiel der Einnietmutter 33 mit dem Befestigungselement 20 und der Schraubverbindung 21 ist die Hauptsäule 18 sicher an dem Befestigungselement 20 und somit an der Zahnsegmenteinrichtung 8 gehalten, wobei in Längsrichtung der Schraubverbindung 21 zwischen dem Kopfbereich 29 der Schraubverbindung 21 und der Hauptsäule 18, zwischen der Hauptsäule 18 und dem Befestigungselement 20 sowie zwischen dem Befestigungselement 20 und dem Bund 34 der Einnietmutter 33 jeweils kein Abstand vorliegt und die jeweiligen Bauteile 29 und 18 bzw. 18 und 20 bzw. 20 und 34 bündig aneinander grenzen.

Die Einnietmutter 33 weist einen Deformationsbereich 37 auf, der durch den frei mit der Schraubverbindung 21 zusammenwirkenden Bereich der Einnietmutter 33 gebildet ist und sich in Längsrichtung der Einnietmutter 33 von dem Bund 34 bis zu dem über das Innengewinde 35 mit dem Außengewinde 31 der Schraubverbindung 31 zusammenwirkenden Bereich erstreckt. Der Deformationsbereich 37 ist zur Umwandlung einer äußeren, auf das Verdeck 2 wirkenden Kraft, die beispielsweise in einem Crashfall bei sich in einer Zwischenposition zwischen der geöffneten Position und der geschlossenen Position befindlichen Verdeck 2 auf das Verdeck 2 wirkt und einen definierten Grenzwert überschreitet, in Verformungsenergie ausgeführt.

Der Deformationsbereich 37 ist dabei derart ausgelegt, dass er lediglich bei auf das Verdeck 2 wirkenden Kräften, die die in einem Regelbetrieb bei einer Überführung des Verdecks 2 zwischen der geschlossenen Position und der offenen Position auf das Verdeck 2 wirkenden Kräfte deutlich, beispielsweise um einen Faktor von größer 100, überschreiten, die Kräfte in Verformungsenergie umwandelt. Wie Fig. 4 zeigt, wird der Deformationsbereich 37 in einem Crashfall mit in einer Zwischenposition befindlichem Verdeck 2 in Längsrichtung der Einnietmutter 33 gestaucht, wobei hierdurch die äußere, auf das Verdeck 2 wirkende Kraft in gewünschtem Umfang gezielt in Verformungsenergie umgewandelt wird.

Durch eine entsprechende Ausführung der Einnietmutter 33 mit dem Deformationsbereich 37 kann erreicht werden, dass die äußere Kraft zumindest zu einem großen Teil im Bereich der Einnietmutter 33 in Verformungsenergie umgewandelt wird und weitere Bauteile des Verdecks 2 durch die äußere, auf das Verdeck 2 wirkende Kraft nicht oder nicht in unerwünschtem Umfang verformt oder beschädigt werden.

Fig. 4 zeigt einen Zustand nach einem Crash, wobei auf das Verdeck 2 eine einen definierten Grenzwert überschreitende, äußere Kraft eingewirkt hat. Hierbei ist ersichtlich, dass der Deformationsbereich 37 der Einnietmutter 33 in radialer Richtung nach außen vorgewölbt ist, wobei durch eine derartige Verformung der Einnietmutter 33 die äußere, auf das Verdeck 2 wirkende Kraft in Verformungsenergie umgewandelt ist. Durch die hiermit einhergehende Verkürzung der Einnietmutter 33 in ihrer Längsrichtung liegt hierbei in Längsrichtung der Schraubverbindung 21 zwischen dem Kopfbereich 29 der Schraubverbindung 21 und der Hauptsäule 18, der Hauptsäule 18 und dem Befestigungselement 20 und gegebenenfalls zwischen dem Befestigungselement 20 und dem Bund 34 der Einnietmutter 33 ein Abstand vor.

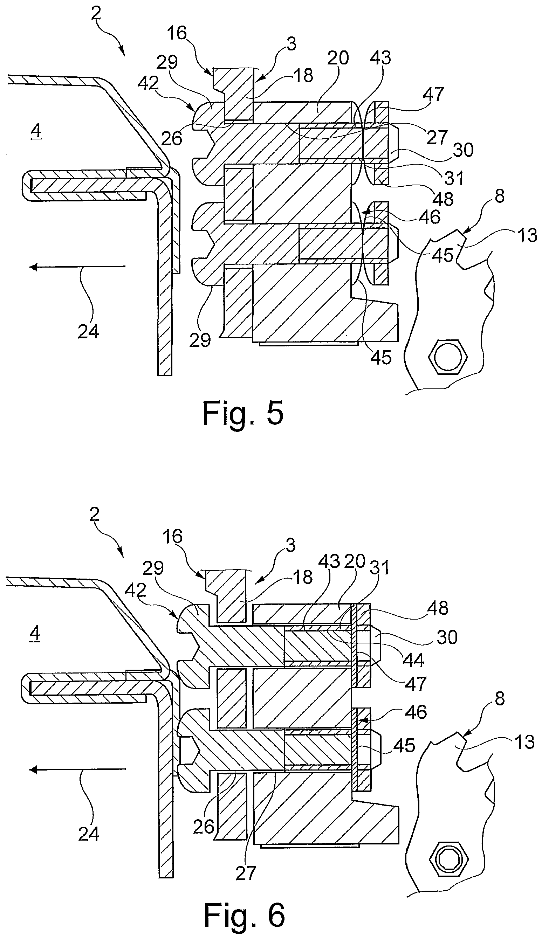

Fig. 5 und Fig. 6 bzw. Fig. 7 und Fig. 8 zeigen jeweils eine alternative nicht erfindungsgemäße Ausführung, wobei im Folgenden lediglich auf die Unterschiede dieser Ausführungen zu der Ausführung gemäß Fig. 3 und Fig. 4 eingegangen wird. Bei der Ausführung gemäß Fig. 5 und Fig. 6 ist wiederum eine Schraubverbindung 42 vorgesehen, die im Unterschied zu der Schraubverbindung 21 allerdings mit einem in Längsrichtung der Schraubverbindung 42 längeren, das Außengewinde 31 aufweisenden Bereich ausgeführt ist. Auf das Außengewinde 31 der Schraubverbindung 42 ist eine Hülseneinrichtung 43 mit einem Innengewinde 44 aufgeschraubt, wobei die Hülseneinrichtung 43 in einem dem Kopfbereich 29 abgewandten Endbereich 30 der Schraubverbindung 42 mit einem sich bezüglich einer Längsachse der Schraubverbindung 42 radial nach außen erstreckenden Absatz 48 ausgeführt ist. Die Hülseneinrichtung 43 verläuft dabei zumindest bereichsweise innerhalb des Befestigungselements 20 und ist gegenüber diesem in Längsrichtung der Schraubverbindung 42 verschiebbar gelagert. In Längsrichtung der Schraubverbindung 42 zwischen dem Absatz 48 der Hülseneinrichtung 43 und dem Befestigungselement 20 ist eine einen Deformationsbereich 47 darstellende Federeinrichtung 46 angeordnet, die vorliegend mit zwei in Längsrichtung der Schraubverbindung 42 wirkenden, gegengleich angeordneten Federscheiben 45, insbesondere Blattfederscheiben, ausgebildet ist.

Die Federscheiben 45 der Federeinrichtung 46 werden durch eine auf das Verdeck 2 wirkende, äußeren Kraft in einem Crashfall entgegen ihrer Federkraft deformiert, so dass ein Abstand zwischen dem scheibenförmigen Element 43 und dem Befestigungselement 20 reduziert wird. Durch eine entsprechende Wahl und/oder Ausführung der Federeinrichtung 46 kann eine im Crashfall auf das Verdeck 2 wirkende Kraft in gewünschtem Umfang im Bereich der Federeinrichtung 46 in Verformungsenergie umgewandelt werden.

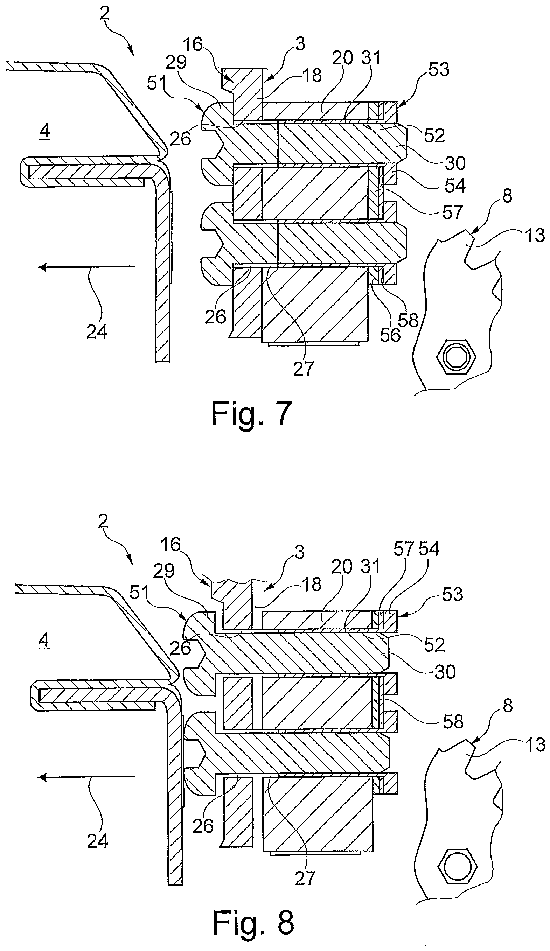

Bei der Ausführung gemäß Fig. 7 und Fig. 8 ist wiederum eine Schraubverbindung 51 mit einem Außengewinde 31 vorgesehen, wobei die Schraubverbindung 51 mit einer ein Innengewinde 52 aufweisenden Hülseneinrichtung 53 in Wirkverbindung gebracht ist. Die Hülseneinrichtung 53 weist in einem dem Kopfbereich 29 der Schraubverbindung 51 abgewandten Endbereich einen in radialer Richtung bezüglich einer Längsachse der Schraubverbindung 21 nach außen vorkragenden Absatz 54 auf, verläuft vorliegend zumindest bereichsweise innerhalb des Befestigungselements 20 und ist gegenüber dem Befestigungselement 20 in Längsrichtung der Schraubverbindung 51 bewegbar.

In Längsrichtung der Schraubverbindung 51 zwischen dem Absatz 54 der Hülseneinrichtung 53 und dem Befestigungselement 20 ist hier ein einen Deformationsbereich 56 bildendes, komprimierbares Element 57 angeordnet, das als Gummielement oder Kunststoffelement, insbesondere mit Ethylen-Propylen-Dien-Kautschuk, ausgebildet ist. Zur Erzielung einer günstigen Flächenabstützung bzw. Flächenpressung ist vorliegend auf einer dem Kopfbereich 29 der Schraubverbindung 51 abgewandten Seite des komprimierbaren Elements 57 ein insbesondere metallisches Abstützelement 58 angeordnet, das vergleichbar zu dem komprimierbaren Element 57 im Bereiche der Schraubverbindung 51 mit einer Ausnehmung ausgeführt ist.

Bei einer in einem Crashfall auf das Verdeck 2 wirkenden, äußeren Kraft wird das komprimierbare Element 57 in Längsrichtung der Schraubverbindung 51 gestaucht und wandelt hierbei die äußere Kraft in Verformungsenergie um. Vorliegend sind ein komprimierbares Element 57 und ein Abstützelement 58 vorgesehen, das mit den Hülseneinrichtungen 53 der vorliegend zwei Schraubverbindungen 51 zusammenwirkt. Alternativ hierzu kann jeder Schraubverbindung ein komprimierbares Element und ein Abstützelement zugeordnet sein.

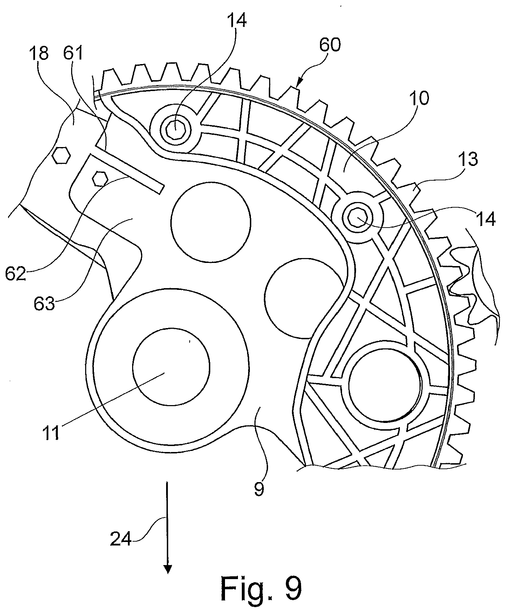

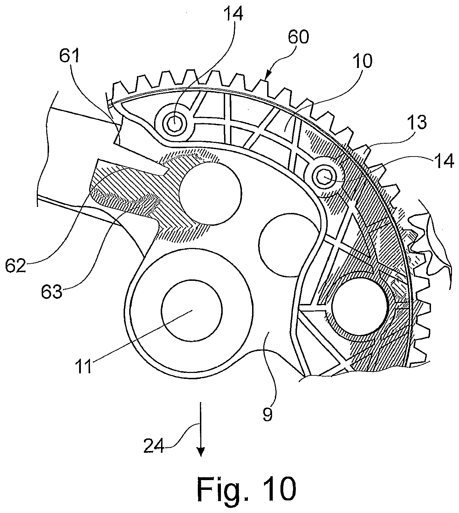

Fig. 9 und Fig. 10 zeigen eine Ausführung der Erfindung mit einer Zahnsegmenteinrichtung 60, die im Wesentlichen vergleichbar zu der Zahnsegmenteinrichtung 8 ausgeführt ist. Im Unterschied zu der Zahnsegmenteinrichtung 8 weist das Scheibenelement 9 der Zahnsegmenteinrichtung 60 eine schlitzförmige Ausnehmung 61 bzw. einen Spalt auf, durch die bzw. den ein Deformationsbereich 62 der Zahnsegmenteinrichtung 60 definiert ist. Die schlitzförmige Ausnehmung 61 ist vorliegend in einem Bereich des Scheibenelements 9 angeordnet, in dem das in Fig. 9 und Fig. 10 nicht näher ersichtliche Befestigungselement 20 an das Scheibenelement 9 anbindbar ist.
Die schlitzförmige Ausnehmung 61 weist vorliegend eine Länge auf, die hier um ein Vielfaches größer als eine Breite der Ausnehmung 61 ist und erstreckt sich hier bei geschlossenem Verdeck 2 im Wesentlichen in Fahrzeughochrichtung. Grundsätzlich kann eine Form und Ausrichtung der Ausnehmung je nach Anwendungsfall flexibel variiert werden. Bezüglich des Drehpunkts 11 der Zahnsegmenteinrichtung 60 erstreckt sich die schlitzförmige Ausnehmung 61 vorliegend im Wesentlichen in tangentialer Richtung und im Wesentlichen in Erstreckungsrichtung der Hauptsäule 18 im Bereich des Befestigungselements 20.
Das Scheibenelement 9 wird durch die schlitzförmige Ausnehmung 61 definiert geschwächt, wobei durch die schlitzförmige Ausnehmung 61 ein Bereich 63 des Scheibenelements 9 begrenzt ist, der vorliegend auf einer dem Zahnsegment 10 abgewandten Seite der schlitzförmigen Ausnehmung 61 angeordnet ist.

In einem Crashfall bei in einer Zwischenposition befindlichem Verdeck 2 wird der Bereich 63 des Scheibenelements 9 in Umfangsrichtung des Scheibenelements 9 verformt, so dass die schlitzförmige Ausnehmung 61 aufgeweitet wird. Hierbei wird zumindest ein Teil der äußeren, auf das Verdeck 2 wirkenden Kraft in Verformungsenergie umgewandelt. Die schlitzförmige Ausnehmung 61 ist dabei derart angeordnet und ausgeführt, dass sie bei einer Umwandlung der äußeren Kraft in Verformungsenergie V-förmig aufgeweitet wird und der Bereich 63 nicht von dem Scheibenelement 9 getrennt wird. Durch die Verformung des Scheibenelements 9 in dem Deformationsbereich 62 kann insbesondere ein Versagen des Antriebsritzels 7 des Elektromotors 5 sicher verhindert werden, so dass eine unkontrollierte Bewegung des Verdecks 2 bei einem Crash effektiv verhindert ist.

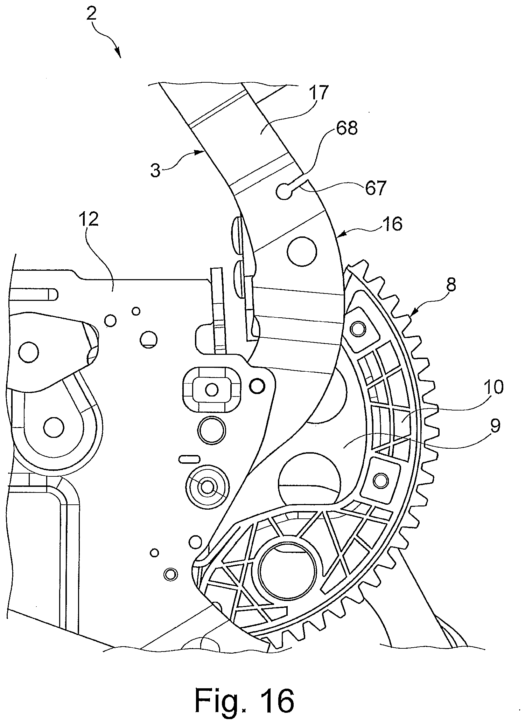

Eine vom Funktionsprinzip hierzu vergleichbare Ausführung der Erfindung ist in Fig. 16 gezeigt. Hierbei weist ein Hauptlenker 66, der im Wesentlichen vergleichbar zu dem Hauptlenker 17 ausgeführt ist, eine einen Deformationsbereich 68 bildende, schlitzförmige Ausnehmung 67 auf, die vorliegend im Wesentlichen senkrecht zu einer Erstreckungsrichtung des Hauptlenkers 66 im Bereich der schlitzförmigen Ausnehmung 67 verläuft.

Die schlitzförmige Ausnehmung 67 ist hinsichtlich ihrer Länge und Breite wiederum derart ausgeführt, dass der Hauptlenker 66 in dem Deformationsbereich 68 die komplette äußere, auf das Verdeck 2 wirkende und den definierten Grenzwert überschreitende Kraft in Verformungsenergie umwandelt, so dass der Hauptlenker 66 lediglich verformt wird und keine Materialabtrennung stattfindet.

Grundsätzlich kann ein Deformationsbereich mit einer schlitzartigen oder andersartig ausgeführten Ausnehmung vergleichbar zu dem Deformationsbereich des Hauptlenkers auch bei anderen Verdeckgestängeelementen oder zusätzlich in anderen Verdeckgestängeelementen des Verdecks vorgesehen sein.

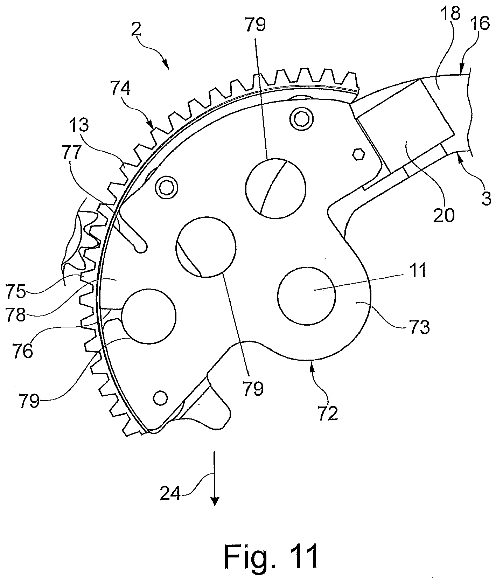

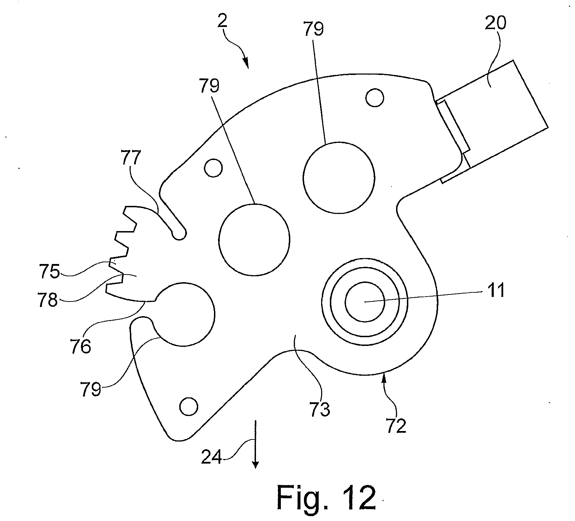

Eine weitere, alternative Ausführung der Erfindung ist in Fig. 11 bis Fig. 14 gezeigt. Hierbei ist eine Zahnsegmenteinrichtung 72 ersichtlich, die grundsätzlich vergleichbar zu der Zahnsegmenteinrichtung 8 ausgeführt ist. Im Folgenden wird daher lediglich auf die Unterschiede der Zahnsegmenteinrichtung 72 zu der Zahnsegmenteinrichtung 8 näher eingegangen.

Die Zahnsegmenteinrichtung 72 ist ebenfalls mit einem Scheibenelement 73 und einem mit dem Scheibenelement 73 verbundenen Zahnsegment 74 ausgebildet. Das Scheibenelement 73 unterscheidet sich von dem Scheibenelement 9 dadurch, dass es vorliegend einen kammförmigen Bereich aufweist, der mit vier Zähnen 75 ausgeführt ist. Die Zähne 75 des Scheibenelements 9 sind zum Zusammenwirken mit dem Antriebsritzel 7 des Elektromotors 5 vorgesehen, wobei die Zähne 75 in einem Bereich des Scheibenelements 73 angeordnet sind, der hier um etwa 120° bezüglich des Drehpunkts 11 der Zahnsegmenteinrichtung 72 gegenüber einem Bereich, in dem das Befestigungselement 20 an dem Scheibenelement 73 angebunden ist, beabstandet ist. Hierdurch wird vorliegend erreicht, dass die Zähne 75 des Scheibenelements 9 mit dem Antriebsritzel 7 in Eingriff stehen, wenn das Verdeck 2 sich in seiner höchsten Stellung befindet.

In Umfangsrichtung des Scheibenelements 9 benachbart zu den Zähnen 75 ist jeweils eine vorliegend im Wesentlichen in radialer Richtung des Scheibenelements 9 verlaufende, schlitzförmige Ausnehmung 76, 77 angeordnet, durch die ein die Zähne 75 umfassender, kammförmiger Deformationsbereich 78 des Scheibenelements 9 definiert ist. Das Scheibenelement 9 weist zur Gewichtsoptimierung vorliegend drei im Wesentlichen kreisförmige Ausnehmungen 79 auf, wobei die schlitzförmige Ausnehmung 76 vorliegend in eine dieser Ausnehmung 79 mündet.

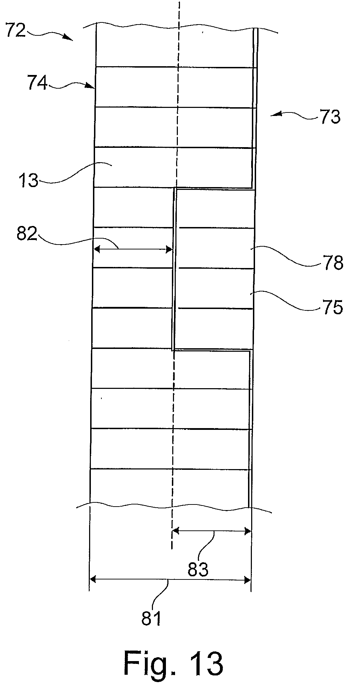

Fig. 13 zeigt stark schematisiert ein Zusammenwirken der Zähne 75 des Scheibenelements 73 mit den Zähnen 13 des Zahnsegments 74. Die Zähne 13 des Zahnsegments 74 weisen dabei in axialer Richtung des Scheibenelements 73 grundsätzlich eine Breite 81 auf. In dem Umfangsbereich des Scheibenelements 73, in dem die Zähne 75 des Scheibenelements 73 angeordnet sind, ist eine Breite 82 der Zähne 13 des Zahnsegments 74 in axialer Richtung des Scheibenelements 73 gegenüber der Breite 81 um einen Wert reduziert, der im Wesentlichen einer Breite 83 der Zähne 75 des Scheibenelements 73 entspricht. Hierdurch wird erreicht, dass sich die Zähne 75 des Scheibenelements 73 und die Zähne 13 des Zahnsegments 74 in dem Deformationsbereich 78 wenigstens annähernd zu der Breite 81 ergänzen und die gemeinsam durch die Zähne 13 des Zahnsegments 13 und die Zähne 75 des Scheibenelements 73 gebildeten Zähne der Zahnsegmenteinrichtung 72 in jedem Umfangsbereich des Scheibenelements 73 im Wesentlichen die Breite 81 aufweisen.

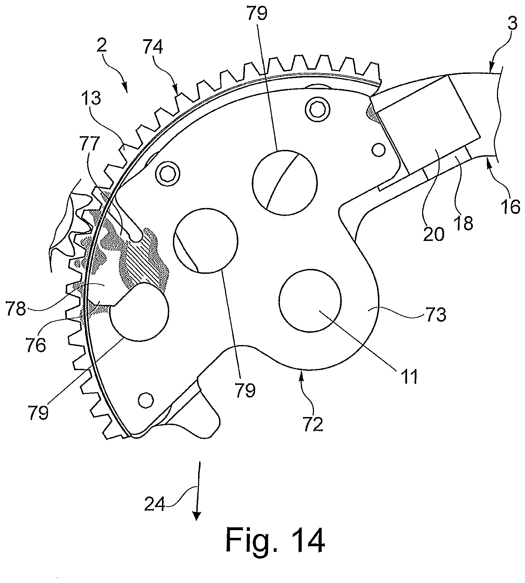

Fig. 14 zeigt einen Zustand der Zahnsegmenteinrichtung 72 nach einem Crash, in dem eine äußere, einen definierten Grenzwert übersteigende Kraft auf das Verdeck 2 gewirkt hat. Hierbei ist das Scheibenelement 73 im Deformationsbereich 78 verformt, wobei durch die Verformung des Scheibenelements 73 im Deformationsbereich 78 die bei dem Crash auf das Verdeck 2 wirkende, äußere Kraft zumindest teilweise in Verformungsenergie umgewandelt wurde.
Stehen die Zähne 75 des Scheibenelements 73 bei einer Verlagerungsbewegung des Verdecks 2 bei einem Crash nicht in Eingriff mit dem Antriebsritzel 7 des Elektromotors 5, brechen die zum Zeitpunkt des Crashs in Eingriff mit dem Antriebsritzel 7 stehenden Zähne 13 des aus Kunststoff gebildeten Zahnsegments 13 und die Zahnsegmenteinrichtung 72 wird um den Drehpunkt 11 gedreht. Kommen die Zähne 75 des Scheibenelements 73 nach einer entsprechenden Drehung der Zahnsegmenteinrichtung 72 um den Drehpunkt 11 mit dem Antriebsritzel 7 in Eingriff, wird die äußere Kraft im Bereich des Deformationsbereichs 78 in oben näher beschriebenem Umfang in Verformungsenergie umgewandelt.

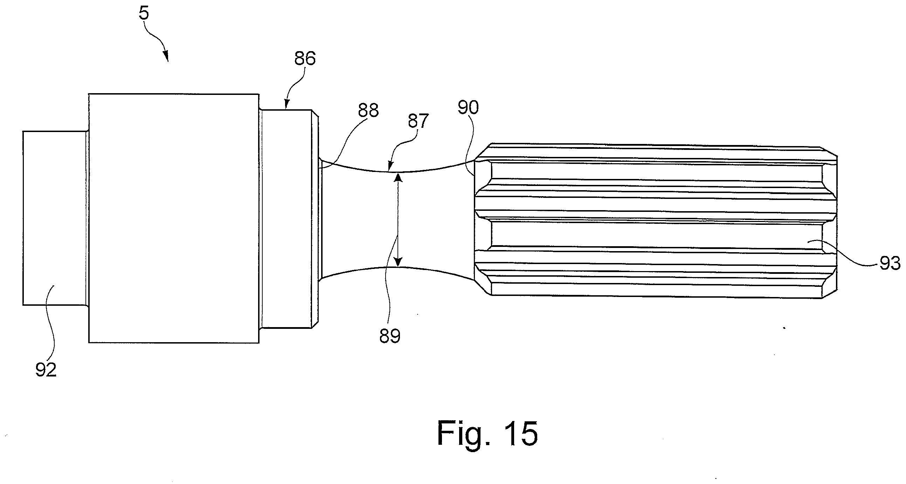

Eine weitere nicht erfindungsgemäße Ausführung ist in Fig. 15 gezeigt. Hierbei ist eine Antriebswelle 86 des Elektromotors 5 näher ersichtlich, die zum Antrieb einer Zahnsegmenteinrichtung 8, 60 bzw. 72 vorgesehen ist. Die Antriebswelle 86 weist einen Deformationsbereich 87 auf, der zur Umwandlung einer bei einem Crash auf das Verdeck 2 wirkenden Kraft in Verformungsenergie ausgeführt ist. Der Deformationsbereich 87 ist dadurch gekennzeichnet, dass ein Querschnitt der Antriebswelle 86 in dem Deformationsbereich 87 in Längsrichtung der Antriebswelle 86 hier ausgehend von einem ersten Randbereich 88 bis zu einem Minimum 89 kontinuierlich abnimmt und anschließend wieder kontinuierlich bis zu einem zweiten Randbereich 90 zunimmt, wobei ein Querschnitt in dem zweiten Randbereich 90 im Wesentlichen einem Querschnitt in dem ersten Randbereich 88 entspricht.

Bei einer äußeren, bei einem Crash auf das Verdeck 2 wirkenden Kraft wird ein erster Endbereich 92 der Antriebswelle 86, der beispielsweise über eine Flanschverbindung mit dem Elektromotor 5 verbunden ist, gegenüber einem zweiten Endbereich 93 der Antriebswelle 86, der beispielsweise über eine Getriebeeinrichtung mit der Zahnsegmenteinrichtung 8, 60 bzw. 72 in Wirkverbindung steht, durch eine plastische Verformung bzw. Dehnung des Deformationsbereichs 87 verdreht, wobei hierbei die äußere Kraft in Verformungsenergie umgewandelt wird. Je nach Querschnittsgestaltung und Wahl einer Dehngrenze des Materials der Antriebswelle 86 können Eigenschaften der Antriebswelle 86 in gewünschtem Umfang eingestellt und die Größe der durch plastische Verformung aufnehmbaren Energie durch den Deformationsbereich 87 festgelegt werden.

## Patentansprüche

1. Verdeck (2) eines Cabriolet-Fahrzeugs (1), das mittels eines Verdeckgestänges (3) zwischen einer offenen Position und einer geschlossenen Position verlagerbar ist, wobei wenigstens ein Element (33, 45, 57, 60, 66, 72, 86) des Verdecks (2) einen Deformationsbereich (37, 47, 56, 62, 68, 78, 87) aufweist, wobei der Deformationsbereich (37, 47, 56, 62, 68, 78, 87) des Elements (33, 45, 57, 60, 66, 72, 86) des Verdecks (2) zur Umwandlung zumindest eines Teils einer bei sich in einer Zwischenposition zwischen der offenen Position und der geschlossenen Position befindlichem Verdeck (2) auf das Verdeck (2) wirkenden, äußeren Kraft, die einen vorgegebenen Grenzwert überschreitet, in Verformungsenergie ausgeführt ist, **dadurch gekennzeichnet, dass** das den Deformationsbereich (62, 78) aufweisende Element des Verdecks (2) eine zur Verlagerung des Verdecks (2) vorgesehene Zahnsegmenteinrichtung (8, 60, 72) ist, wobei das Verdeck (2) durch ein Zusammenwirken der Zahnsegmenteinrichtung (8, 60, 72) mit einer Antriebseinrichtung (5) zwischen seiner offenen Position und seiner geschlossenen Position verlagerbar ist.

2. Verdeck nach Anspruch 1, **dadurch gekennzeichnet, dass** das den Deformationsbereich (62, 78) aufweisende Element (60, 72) des Verdecks (2) bei Auftreten einer äußeren, einen vorgegebenen Grenzwert überschreitenden Kraft in dem Deformationsbereich (62, 78) elastisch und/oder plastisch verformbar ist.

3. Verdeck nach einem der Ansprüche 1 oder 2, **dadurch gekennzeichnet, dass** das den Deformationsbereich (62, 78) aufweisende Element (60, 72) des Verdecks (2) in dem Deformationsbereich (62, 78) wenigstens eine schlitzförmige Ausnehmung (61, 76, 77) aufweist.

4. Verdeck nach einem der Ansprüche 1 bis 3, **dadurch gekennzeichnet, dass** eine als Elektromotor oder hydraulischer Antrieb ausgeführte Antriebseinrichtung (5) zur Verlagerung des Verdecks (2) zwischen der offenen Position und der geschlossenen Position vorgesehen ist.

5. Verdeck nach einem der Ansprüche 1 bis 4, **dadurch gekennzeichnet, dass** die Zahnsegmenteinrichtung (8, 60, 72) mit einem Scheibenelement (9, 73) und wenigstens einem Zähne (13) der Zahnsegmenteinrichtung (8, 60, 72) aufweisenden Zahnsegment (10, 74) ausgebildet ist, wobei das Zahnsegment (10, 74) in mit dem Scheibenelement (9, 73) verbundenem Zustand zumindest bereichsweise in Umfangsrichtung der Zahnsegmenteinrichtung (8, 60, 72) in einem in radialer Richtung äußeren Randbereich des Scheibenelements (9, 73) angeordnet ist.

6. Verdeck nach Anspruch 5, **dadurch gekennzeichnet, dass** das Scheibenelement (73) zumindest bereichsweise mit Zähnen (75) ausgeführt ist, die bei der Überführung des Verdecks (2) zwischen der geschlossenen und der offenen Position zeitweise in Eingriff mit einem Antriebsritzel (7) der Antriebseinrichtung (5) stehen, wobei das Scheibenelement (73) im Bereich seiner Zähne (75) mit wenigstens einer schlitzartigen Ausnehmung (76, 77) ausgeführt ist.

7. Verdeck nach Anspruch 6, **dadurch gekennzeichnet, dass** sämtliche Zähne der Zahnsegmenteinrichtung (72) eine im Wesentlichen identische Breite (81) in axialer Richtung der Zahnsegmenteinrichtung (72) aufweisen, wobei die Zähne der Zahnsegmenteinrichtung (72) im Bereich der Zähne (75) des Scheibenelements (73) gemeinsam von den Zähnen (75) des Scheibenelements (73) und den Zähnen (13) des Zahnelements (74) gebildet sind.

## Claims

1. Convertible top (2) of a convertible vehicle (1) which can be displaced between an open position and a closed position by means of a top linkage (3), wherein at least one element (33, 45, 57, 60, 66, 72, 86) of the top (2) comprises a deformation region (37, 47, 56, 62, 68, 78, 87), the deformation region (37, 47, 56, 62, 68, 78, 87) of the element (33, 45, 57, 60, 66, 72, 86) of the top (2) being designed to convert at least a part of an external force, which is applied to the top (2) in an intermediate position between the open position and the closed position of the top (2) and which is exceeding a pre-defined threshold value, into deformation energy, **characterized in that** the element of the top (2) comprising the deformation region (62, 78) is a toothed segment device (8, 60, 72) provided for moving the top (2), wherein the top (2) is displaceable between its open position and its closed position by interaction of the toothed segment device (8, 60, 72) with a drive device (5).

2. Convertible top according to claim 1, **characterized in that** the element (60, 72) of the top (2) comprising the deformation region (62, 78) is elastically and/or plastically deformable when an external force occurs in the deformation region (62, 78) which exceeds a predetermined threshold value.

3. Convertible top according to claim 1 or 2, **characterized in that** the element (60, 72) of the top (2) having the deformation region (62, 78) comprises at least one slot-shaped recess (61, 76, 77) in the deformation region (62, 78).

4. Convertible top according to any one of claims 1 to 3, **characterized in that** a drive device (5) designed as an electric motor or hydraulic drive is provided for moving the top (2) between the open position and the closed position.

5. Convertible top according to any one of claims 1 to 4, **characterized in that** the toothed segment device (8, 60, 72) is formed with a disc element (9, 73) and at least one tooth segment (10, 74) providing teeth (13) of the toothed segment device (8, 60, 72), wherein the tooth segment (10, 74), in the state connected to the disc element (9, 73), is arranged at least regionally in the circumferential direction of the toothed segment device (8, 60, 72) in a radially outer edge region of the disc element (9, 73).

6. Convertible top according to claim 5, **characterized in that** the disc element (73) is designed, at least in some areas, with teeth (75) which, when the top (2) is transferred between the closed and the open position, are temporarily in engagement with a drive pinion (7) of the drive device (5), wherein the disc element (73) is designed in the region of its teeth (75) with at least one slot-like recess (76, 77).

7. Convertible top according to claim 6, **characterized in that** all teeth of the toothed segment device (72) provide a substantially identical width (81) in the axial direction of the toothed segment device (72), wherein the teeth of the toothed segment device (72) in the region of the teeth (75) of the disc element (73) are jointly formed by the teeth (75) of the disc element (73) and the teeth (13) of the tooth element (74).

## Revendications

1. Capote (2) d'un véhicule cabriolet (1) qui peut être déplacé entre une position ouverte et une position fermée au moyen d'un bras supérieur (3), au moins un élément (33, 45, 57, 60, 66, 72, 86) de la capote (2) comprend une région de déformation (37, 47, 56, 62, 68, 78, 87), la région de déformation (37, 47, 56, 62, 68, 78, 87) de l'élément (33, 45, 57, 60, 66, 72, 86) de la capote (2) étant conçue pour convertir au moins partiellement une force externe, qui est appliqué à la capote (2) dans une position intermédiaire entre la position ouverte et la position fermée de la capote (2) et qui dépasse une valeur seuil prédéfinie, en énergie de déformation, **caractérisée en ce que** l'élément de la capote (2) ayant la zone de déformation (62, 78) est un dispositif à segments dentés (8, 60, 72) prévu pour déplacer la capote (2), la capote (2) pouvant être déplacé entre sa position ouverte et sa position fermée par interaction du dispositif à segments dentés (8, 60, 72) avec un dispositif de transmission (5).

2. Capote selon la revendication 1, **caractérisée en ce que** l'élément (60, 72) de la capote (2) comprenant la zone de déformation (62, 78) est déformable élastiquement et/ou plastiquement lorsqu'une force externe qui dépasse une valeur seuil prédéterminée survient dans la zone de déformation (62, 78).

3. Capote selon la revendication 1 ou 2, **caractérisée en ce que** l'élément (60, 72) de la capote (2) présentant la zone de déformation (62, 78) comporte au moins un évidement (61, 76, 77) en forme de fente dans la zone de déformation (62, 78).

4. Capote selon l'une quelconque des revendications 1 à 3, **caractérisée en ce qu'**un dispositif d'entraînement (5) réalisé sous la forme d'un moteur électrique ou d'un entraînement hydraulique est prévu pour déplacer la capote (2) entre la position ouverte et la position fermée..

5. Capote selon l'une quelconque des revendications 1 à 4, **caractérisée en ce que** le dispositif à segments dentés (8, 60, 72) est formé avec un élément de disque (9, 73) et au moins un segment de dent (10, 74) fournissant des dents (13) du dispositif à segments dentés (8, 60, 72), dans laquelle le segment de dent (10, 74), dans l'état relié à l'élément de disque (9, 73), est disposé au moins régionalement dans la direction circonférentielle du dispositif à segment denté (8, 60, 72) dans une région de bord radialement extérieure de l'élément de disque (9, 73).

6. Capote selon la revendication 5, **caractérisée en ce que** l'élément de disque (73) est pourvu, au moins dans certaines zones, de dents (75) qui, lorsque la capote (2) est transférée entre la position fermée et la position ouverte, sont temporairement en prise avec un pignon moteur (7) du dispositif moteur (5), l'élément de disque (73) étant conçu dans la zone des dents (75) avec au moins un évidement (76, 77) en forme de fente.

7. Capote selon la revendication 6, **caractérisée en ce que** toutes les dents du dispositif à segments dentés (72) présentent une largeur (81) sensiblement identique dans la direction axiale du dispositif à segments dentés (72), les dents du dispositif à segments dentés (72) étant formées conjointement par les dents (75) de l'élément à disques (73) et les dents (13) de l'élément à dents (74), dans la zone des dents (75) de l'élément à disques (73).
